Europäisches Patentamt

European Patent Office

Office européen des brevets

(11) Publication number: **0 412 048 A1**

# EUROPEAN PATENT APPLICATION

(21) Application number: **90810459.9**

(51) Int. Cl.⁵: **C22B 13/02**

(22) Date of filing: **21.06.90**

(30) Priority: **19.07.89 CH 2686/89**

(43) Date of publication of application:
**06.02.91 Bulletin 91/06**

(84) Designated Contracting States:
**AT BE DE DK ES FR GB GR IT LU NL SE**

(71) Applicant: **KENSINGTON LIMITED**
**1, Athol Street**
**Douglas, Isle of Man(GB)**

(72) Inventor: **Dazzi, Giorgio**

Via Maggio 32
CH-6906 Lugano(CH)
Inventor: **Colombo, Roberto**
c/o Giorgio Dazzi Via Maggio 321
CH-6906 Lugano(CH)

(74) Representative: **Baggiolini, Raimondo et al**
**Patent Attorneys**
**Fiammenghi-Fiammenghi-Racheli Via San**
**Gottardo 15**
**CH-6900 Lugano(CH)**

(54) **Process for recovering pure lead and waterproofing ecological slags from worn-out batteries.**

(57) The process consists in adding to the sulfate recovered from the plates of the worn-out batteries and to the bioxide obtained at the melting temperature a catalyst with a base of alkali metal carbonates (for example, marble sawdust) and potassium and aluminum silicates (for example, granite sawdust), obtaining absolutely lead-free ecological slags which can be used, when suitably treated, for example as waterproofing of grounds at the water-bearing strata.

EP 0 412 048 A1

# PROCESS FOR RECOVERING PURE LEAD AND WATERPROOFING ECOLOGICAL SLAGS FROM WORN-OUT BATTERIES

This invention has as its object a process for recovering pure lead and absolutely lead-free ecological slags, which can be reused as waterproofing, by melting the lead oxide and sulfate of worn-out batteries.

Processes are known for recovery of pure lead by melting the lead oxide and sulfate of worn-out batteries for motor vehicles and other uses.

They generally use carbon and iron as reducing agents.

Although the reaction between carbon and iron is exothermic, the energy balance of said known processes is not very encouraging since on the whole a notable amount of thermal energy is required for the reaction.

A further serious drawback of said known processes consists in the fact that the slags that are obtained from the melting, still contain about 3% of lead and since lead is a poison, they constitute an ecologically unacceptable waste, which creates serious drawbacks when the tons of slags are considered that are produced annually in all the countries of the world.

The process according to the invention completely eliminates the above mentioned drawbacks since it makes it possible to recover all the pure lead present, with notable reduction of the energy used and with slags that are absolutely free of lead and are not toxic of harmful.

Said slags, subsequently treated, can further be used as waterproofing of grounds, avoiding transmission of polluting substances to the water-bearing strata.

Said process is characterized by the use, during melting of the lead bioxide and sulfate, of a catalyst with a base of a carbonate of alkali or alkaline-earth metals and potassium and aluminum silicates.

Calcium carbonate ($CaCO_3$) is preferred as the carbonate.

From the practical viewpoint, said catalyst is obtained by using white marble (calcium carbonate) sawdust and granite sawdust.

Actually, granite contains: quartz ($SiO_2$), orthoclase ($KAlSi_3O_3$) and muscovite: $Al_3KH_2(SiO_4)_3$.

With the catalyst according to the invention, the separation of the lead is total and the slags are completely free of it, but not only that, but given the presence of silicates in soluble form, they constitute, when further treated, a waterproofing of notable efficiency, which can be used among others, as has already been said, for waterproofing of grounds at the water-bearing strata.

The attached scheme represents the various phases of the process which, among others, makes it possible in a way known in the art to recover the plastic parts and the sulfuric acid solution of said treated batteries.

As can be seen from said scheme, 1 indicates the storage of the worn-out batteries, 2 the mechanical separation of sulfate (3) and of the lead parts 4 constituting the support frames of the active material and the connections of the plates of the batteries. 5 is the separation of the plastic (containers) and separators of the plates; 6, the active solutions.

The lead sulfate obtained: $PbSO_4$, at a temperature of about 10000, of melting (3), is separated into lead bioxide ($PbO_2$)(10) and into anhydride $SO_2$ (7) which is an energetic reducing agent.

To the lead bioxide $PBO_2$ (10) and possible sulfate $PbSO_4$ still present there are added (at 11) the marble and granite sawdust and reducing agent ($SO_2$) (15) coming from 7 and an optional further reducing agent (Fe, C, S, etc.), thus obtaining the totality of Pb (at 16) and slags (12) absolutely free of lead and reusable as ecological waterproofing agents.

The percentage of marble sawdust can be about 2.5-6 % by weight of the $PbSO_4$ to be treated, that of the granite about 1-3 by weight of the $PbSO_4$.

It is provided that said catalysts can be melting and reducing additives of known type without going outside the scope of protection of the patent.

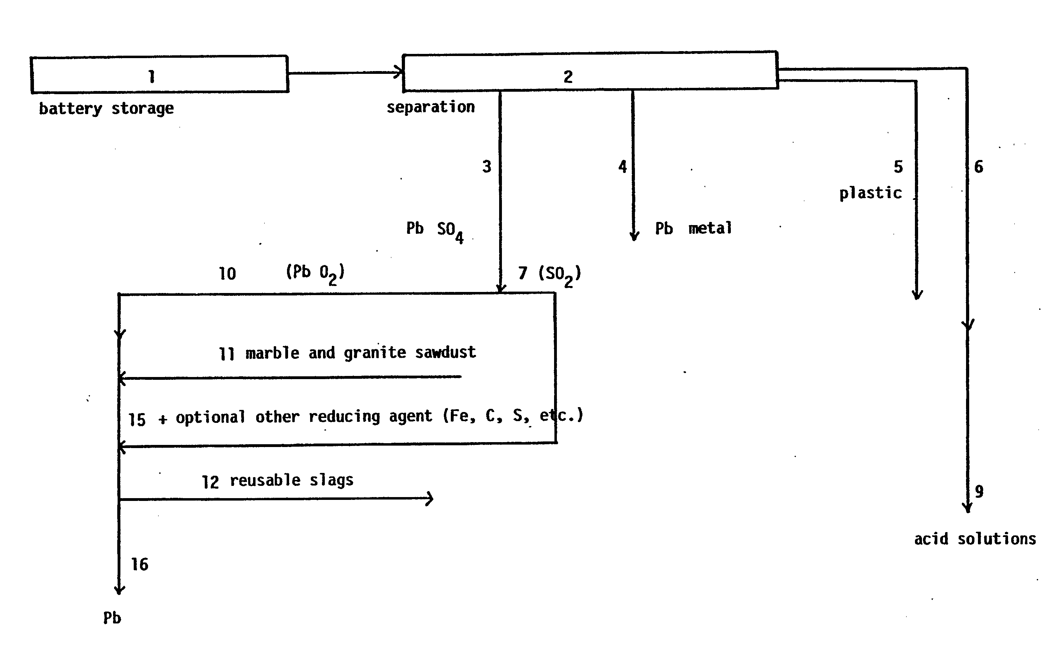

## Claims

1. Process for recovering pure lead and absolutely lead-free ecological slags, which can be reused as waterproofing, by melting the lead oxide and sulfate of worn-out batteries, characterized by the use, during melting of the lead bioxide and sulfate, of a catalyst with a base of a carbonate of alkali or alkaline-earth motals and potassium and aluminum silicates.

2. Process according to claim 1, wherein said catalyst has a base of white marble sawdust and granite sawdust.

3. Lead and waterproofing ecological slags successively treated, obtained with the process according to claims 1 and 2.

4. Use of the waterproofing and successively treated slags according to claim 3 for waterproofing of grounds especially at the water-bearing strata, preventing the transmission of polluting substances.

```
┌─────────────────────────┐        ┌──────────────────────────────────────────────┐
│            1            │───────▶│                       2                        │──┬──┐
└─────────────────────────┘        └──────────────────────────────────────────────┘  │  │
   battery storage                      separation          │              │         │  │
                                                             │              │         │  │
                                                             │ 3            │ 4       │ 5│ 6
                                                             │              │         │plastic
                                        Pb  SO₄              │              │         │  │
                                                             │           Pb metal     │  │
        10        (Pb O₂)                  7 (SO₂)           │                         ▼  │
   ┌─────────────────────────────────────────────────────┐  │                         │  │
   │ ▼                                                    │◀─┘                         │  │
   │                                                      │                            ▼  │
   │    11 marble and granite sawdust                     │                               │
   │◀─────────────────────────────────────────           │                               │
   │                                                      │                               ▼ 9
   │  15 + optional other reducing agent (Fe, C, S, etc.) │                          acid solutions
   │◀─────────────────────────────────────────           │
   └─┬────────────────────────────────────────────────────┘
     │    12 reusable slags
     │───────────────────────────────▶
     │
     │ 16
     ▼
    Pb
```

$Pb\ SO_4$

$(Pb\ O_2)$

$7\ (SO_2)$

11 marble and granite sawdust

15 + optional other reducing agent (Fe, C, S, etc.)

12 reusable slags

acid solutions

EP 0 412 048 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | SOVIET INVENTIONS ILLUSTRATED week K 44, abstract no. 806710, 1 December 1983, Derwent Publications Ltd., London, GB; & SU-A-986947 (NON-FER MET MINE ME) 09.01.1983 | 1 | C 22 B 13/02 |
| A | US-A-4 030 916 (M. LINIGER) * column 3, lines 39-50 * | 1 | |
| A | DE-C-1 233 608 (VEB "ALBERT FUNK") * column 2, lines 46-51 * | 1 | |
| A | US-A-4 135 912 (I.G. MATTHEW et al.) * table 1 * | 1 | |
| A | US-A-4 211 557 (A.P. SYCHEV et al.) * column 6, lines 29-32 * | 1 | |
| A | GB-A-1 577 106 (NL INDUSTRIES) * page 3, lines 5-29 * | 1 | |

| TECHNICAL FIELDS SEARCHED (Int. Cl.5) |
|---|
| C 22 B 13/02 |

The present search report has been drawn up for all claims

| Place of search | Date of completion of search | Examiner |
|---|---|---|
| Berlin | 26 October 90 | SUTOR W |